# NEW EUROPEAN PATENT SPECIFICATION

(11) **EP 0 681 557 B2**
(45) Date of publication and mention of the opposition decision: **13.06.2007**
(45) Mention of the grant of the patent: 14.04.1999
(21) Application number: 95901459.8
(22) Date of filing: 29.11.1994
(51) Int. Cl.: C01B 15/10, C11D 3/39

(54) **A METHOD FOR PREPARING SODIUM PERCARBONATE PARTICLES WITH IMPROVED STABILITY**
VERFAHREN ZUR HERSTELLUNG VON NATRIUMPERCARBONATTEILCHEN MIT VERBESSERTER STABILITÄT
PROCEDE DE PREPARATION DE PARTICULES DE PERCARBONATE DE SODIUM A STABILITE ACCRUE

(30) Priority: 30.11.1993 FI 935342
(43) Date of publication of application: 15.11.1995
(73) Proprietor: KEMIRA OY, SF-02271 Espoo (FI)
(72) Inventor: KORVELA, Timo, FIN-90650 Oulu (FI)
(74) Representative: Setna, Rohan P.
(86) International application number: PCT/FI1994/000532
(87) International publication number: WO 1995/015291

(56) References cited:
- EP-A- 623 553
- EP-A- 0 623 553
- DE-A- 2 441 014
- DE-C- 2 357 966
- DE-C- 2 810 379
- FR-A- 2 226 460
- GB-A- 1 300 855
- SE-B- 414 646
- SU-A- 1 776 842
- US-A- 3 864 454

## Description

The invention relates to a method for preparing sodium percarbonate particles coated with a layer containing sodium bicarbonate. These sodium percarbonate particles with improved stability are usable particularly in detergents.

Sodium percarbonate (SPC) is a water-soluble crystalline peroxygen compound with the molecular formula 2Na₂CO₃·3H₂O₂. Its theoretical active oxygen content (AO) is 15.28% by weight. Sodium percarbonate dissolves relatively fast in water, releasing sodium carbonate and hydrogen peroxide in the solution. Owing to this property, sodium percarbonate has been widely used as a bleaching agent. It is particularly suited for textile bleaching and removal of coloured stains from textiles in industry and households.

A second commonly used bleaching agent is sodium perborate. However, this bleaching agent is being abandoned for environmental reasons. Sodium percarbonate is ideal in the sense that it leaves no residues, nor does it cause eutrophication. It decomposes into oxygen, water and sodium carbonate. Sodium percarbonate also has a sligthly better and more rapid bleaching effect.

Nevertheless, sodium percarbonate involves the problem that, although sodium percarbonate as such is a stable compound, it tends to decompose in detergents during storage, and thus loses its active oxygen. Especially when stored under warm and humid conditions, sodium percarbonate will decompose alone. A second problem of sodium percarbonate relates to detergents containing zeolite. If the detergent contains zeolite, unprotected sodium percarbonate is not applicable, since in that case sodium percarbonate would decompose so quickly that it has no bleaching effect, after a relatively short storing period.

The decomposition of sodium percarbonate can be prevented by coating the sodium percarbonate particles. Coating sodium percarbonate crystals with say, sodium bicarbonate, or an other inorganic coating, has been previously disclosed. The aim was to achieve as thick as possible a bicarbonate layer so as to mechanically isolate sodium percarbonate from the other components, in particular from zeolites.

Litterature also knows a process yielding sodium percarbonate that is stable in zeolite-based detergents, obtained by screening commercial sodium percarbonate in a specific manner. In this way, a given particle size and a given form factor is obtained for the sodium percarbonate.

Patent specification EP-0 546 815 Al discloses a process in which sodium percarbonate particles are sprayed with alkali metal citrate. In this way the surface is provided with a coating that improves the stability of sodium percarbonate. However, the problem with this kind of coating is that the coating must be very thick to be sufficiently impermeable. The same problem occurs in the use of sodium bicarbonate solution for the coating.

A process of coating sodium percarbonate particles with alkali metal carbonates or bicarbonates is known from FR-A-2 226 460 or EP-A-623 553.

The object of the present invention is to provide a process for preparing sodium percarbonate allowing it to be used even in zeolite-containing detergents and under conditions exposing it to high air humidity. The zeolites used in detergents are normally hygroscopic, industrial zeolites containing water from the very outset. The water in zeolite is very mobile, and zeolite may even replace water with hydrogen peroxide, part of the water leaving the zeolite as hydrogen peroxide enters it. As a result, there is a sufficient amount of water to decompose sodium percarbonate very rapidly.

The object is achieved with the method of the invention, which is mainly characterized by the features laid down in the characterizing clause of claim 1.

Preferred embodiments of the invention are described in claims 2 to 4.

The basic idea of the invention is to contact the sodium percarbonate particles with CO₂ gas in the presence of moisture, producing a reaction on the surface of the sodium percarbonate particles that yields sodium bicarbonate. The sodium bicarbonate layer thus formed is quite thin, yet very impermeable. It will thus constitute a protective layer for sodium percarbonate.

The method of the invention can for instance be performed in a fluidized bed. Before the actual coating, the sodium percarbonate particles have been sprayed with water in a fluidized bed while the fluidization air has been admixed with carbon dioxide. In this manner, the surface of the percarbonate particles will be coated with a very thin water film. Sodium percarbonate will dissolve in this water film and the carbon dioxide from the gaseous phase will neutralize it into sodium bicarbonate. As the water film dries, a thin sodium bicarbonate layer will remain. Since, in accordance with the invention, this layer is produced by the contact of the gaseous phase containing carbon dioxide with the moistened surface of the sodium percarbonate particle, it will cover any tiny irregularities, even crystal protrusions, if the crystals are angular or twinned. Each crystal fraction being coated, the coating will be very dense.

An optional method is to use bicarbonate solution for the coating, the atomizing gas being carbon dioxide or any gas rich in carbon dioxide. In that case, sodium bicarbonate may be generated from sodium percarbonate under the effect of carbon dioxide, at the same time as sodium percarbonate is being coated with sodium bicarbonate from the sprayed solution phase. This course of action will produce a sodium bicarbonate coating with less openings, as it is being generated also from the inside.

It is essential that at least part of the sodium bicarbonate produced has been generated from the sodium carbonate of the sodium percarbonate and from the carbon dioxide in the gaseous phase. In this manner, one has achieved a dense coating filling up the pores of the coating layer.

An optional method of the invention is to carry out an additional coating of the sodium percarbonate particles after the carbon dioxide treatment, by adopting conventional coating methods. One such method also uses sodium bicarbonate. Additional coating can be conducted by using air for atomizing during spraying the sodium percarbonate particles with sodium bicarbonate solution, which will further build up the sodium bicarbonate coating when evaporating from the surface. Sodium sulphate is also usable for the additional coating.

The method of the invention has provided a product having improved stability compared to sodium percarbonate coated with conventional methods. The tests will be described in the following.

The tests were conducted by using an Aeromatic apparatus (Aeromatic Strea I). Fluidization air was introduced from below. The perforated bottom plate of the fluidization vessel had a hole in the middle, into which a two-phase nozzle was fitted. The liquid component came from the inner hole and the dispersing air came from the hole around. Instead of dispersing air, carbon dioxide was used in the tests, and water was introduced through the central hole.

There were also tests in which fluidized bed coating was simulated by using a disc rotating about a vertical axis. The sodium percarbonate to be coated was placed on such a disc, comprising a plough which dispersed grains apart from each other as the disc rotated. Either water or a coating solution was sprayed into this zone.

In the tests using carbon dioxide, water was sprayed onto the sodium percarbonate on the disc. Immediately after this, the product was transferred into a laboratory fluidized bed drier, in which carbon dioxide was admixed with fluidization air directly from a gas bottle. The procedure was repeated several times, i.e. having dried, the material to be coated was returned on the disc and humectified, etc. With this procedure a coating layer was produced on the grain surface. However, this is a considerably more complex process than the one using an Aeromatic apparatus described above. The sodium percarbonate particle size was typically slightly under 1 mm in the tests.

The formation of the coating layer was checked in the tests in the terms of the active oxygen content of the product. Active oxygen is calculated from the hydrogen peroxide content of the product. As the coating is being formed, the active oxygen content decreases, in other words hydrogen peroxide is detached as the coating is being formed. The product frequently contains 14.1% of active oxygen without any treatment. By using carbon dioxide coating, a product containing 13.8 to 13.9%, and up to 13.5% of active oxygen has been obtained. This signifies that the layer formed on the surface is very thin. Yet it has been analytically confirmed by the reduction in the active oxygen content of the product.

### Examples

In tests 13, 10, 15 and 12 the coating was conducted by using an Aeromatic Strea 1 apparatus. In the stability tests marked with a Z (table 1) a mechanical mixture of a coated sodium percarbonate sample and zeolite was formed at a 50/50 weight ratio. The purpose of the Z tests was to find out the effect of zeolite on the stability of the coated sample.

In the first comparative test 13, the procedure was as follows. The amount of uncoated sodium percarbonate was 240 g. For the coating, a solution (1440 ml) was prepared, containing 160 g of NaHCO₃. The solution was sprayed by using air. The end product had an active oxygen content of 10.52%.

Test 10 was conducted according to the invention as follows. The amount of uncoated sodium percarbonate was 340 g. For the coating, 900 ml of a solution containing 60 g of NaHCO₃ was prepared. Fluidization was first carried out with CO₂, using 270 ml of solution. The remainder of the solution was used for air fluidization. The active oxygen of the end product was 12.23%.

Test 15 was conducted according to the invention as follows. The amount of uncoated sodium percarbonate was 300 g. 100 g of Na₂SO₄ and 375 g of H₂O was used for the coating. The first 70 to 80.mg of coating solution were sprayed by using CO₂-containing air. The remainder was sprayed by using air. The active oxygen content of the end product was 10.8%. Calculated from this figure, the amount of the coating is 23.4%, taking into account the 14.1% active oxygen content of uncoated sodium percarbonate. The theoretical amount of coating calculated from initial weighing was 25%.

Test 12 was performed according to the invention as follows. The amount of uncoated sodium percarbonate was 300 g also in this test. First coating was carried out by using water and CO₂. After this, the coating was continued with a NaHCO₃ solution (100 g of NaHCO₃, 375 g of H₂O), which was sprayed with air. The active oxygen content of the end product was 11.1%.

In tests 30, 40, 43 the rotating disc described above was used to carry out coating, respectively humectification and coating. After this, the coated substance was transferred into a laboratory fluidized bed drier, in which air and carbon dioxide-containing (12%) air was used as a drying gas. In the stability tests marked with Z (Table 1), a mechanical mixture was formed of the coated sodium percarbonate sample and zeolite at a 50/50 weight ratio.

In comparative test 30 the coating was carried out with a 14% NaHCO₃ solution. In tests 40 and 43, representative of the method of the invention, the coating was carried out by using 14% of NaHCO₃ solution and a CO₂-containing gas for the fluidization. In test 40 water humidification was first performed and then the sample was fluidized with a CO₂-containing gas. This operation was repeated four times. After this, the coating was continued with a 14% NaHCO₃ solution and drying. Test 43 was conducted in the same way but with six repetitions.

Stability was determined as follows. The coated products and the product/zeolite mixtures (50/50) were conserved in open vessels in a climate chamber for 190 h at a temperature of 30 °C and at 70% humidity. After this, their active oxygen was analyzed and the moisture accumulated in the samples was determined by weighing. The decomposition percentage of the samples was calculated, i.e. the amount of decomposed percarbonate. The stability test results are compiled in Table 1. In this table, the column moisture % stands for the increase of moisture content in the course of the test.

When considering the test results, one should keep in mind that the testing conditions applied in the tests were far more demanding than those conducted in closed containers, disclosed in prior art references. Thus, the relative humidity of air in contact with the SPC particles in the tests of Table 1 was much higher.

The results clearly show that when a CO₂-containing gas is being used, a coating is obtained which entails smaller decomposition and moisture absorption than analogous reference coatings. The outcome will be good, when the coating is carried out with water and CO₂ in the first step, and for instance with a NaHCO₃ solution or a Na₂SO₄ solution in the second step. Of these two, sodium sulphate is preferred, considering that the water amount to be evaporated with sodium sulphate is distinctly smaller than with sodium bicarbonate. This is of course due to the fact that sodium sulphate has higher solubility in water.

**Table 1.**

| Stability test results | | | | | |
|---|---|---|---|---|---|
| Test no | Decomposition % | Moisture % | Coating solution | Gas | Equipment |
| 13 | 22 | 3.5 | NaHCO₃ | air | Aeromatic |
| 13+Z | 16 | 1.7 | | | |
| | | | | | |
| 10 | 9.5 | 3.1 | NaHCO₃ | CO₂ | " |
| 10+Z | 21 | 2.4 | | | |
| | | | | | |
| 15 | 17 | 4.0 | Na₂SO₄ | CO₂, air | " |
| 15+Z | 19 | 2.0 | | | |
| | | | | | |
| 12 | 10 | 2.1 | H₂O, NaHCO₃ | CO₂ | " |
| 12+Z | 1.5 | 0.5 | | | |
| | | | | | |
| 30 | 75 | 5.3 | NaHCO₃ | air | Disc+fluidi- |
| 30+Z | 68 | 2.8 | | | zed drier |
| | | | | | |
| 40 | 12 | 5.0 | H₂O, NaHCO₃ | CO₂ | " |
| 40+Z | 35 | 4.2 | | | |
| | | | | | |
| 43 | 9.0 | 4.2 | H₂O, NaHCO₃ | CO₂ | " |
| 43+Z | 18 | 2.3 | | | |

## Claims

1. A method for preparing sodium percarbonate particles coated with a first layer of sodium bicarbonate and a second coating layer on top of said first layer, **characterized in that** the method comprises:
a) the step of spraying an aqueous coating agent solution in a fluidized bed on the surface of the sodium percarbonate particles by using carbon dioxide, or a gas rich in carbon dioxide, as a fluidizing gas, producing a reaction on the surface of the sodium percarbonate particles to form said first layer on the surface of the sodium percarbonate particles, and said second coating layer on top of the first layer, wherein at least a part of said first layer is generated from the sodium carbonate of the sodium percarbonate particles and from the carbon dioxide in the gaseous phase, or
b) a first step of spraying water or an aqueous coating agent solution in a fluidized bed on the surface of the sodium percarbonate particles by using carbon dioxide, or a gas rich in carbon dioxide, as a fluidizing gas, producing a reaction on the surface of the sodium percarbonate particles to form said first layer on the surface of the sodium percarbonate particles, and optionally a second coating layer on top of the first layer, and a second step of spraying an aqueous coating agent solution in a fluidized bed on the surface of the product from the first step, by using carbon dioxide, or a gas rich in carbon dioxide, or any other gas, as a fluidizing gas, to form an additional coating layer on the surface of the product from the first step, wherein at least a part of said first layer is generated from the sodium carbonate of the sodium percarbonate particles and from the carbon dioxide in the gaseous phase.

2. A method as claimed in claim 1, **characterized in that** the second coating layer comprises sodium bicarbonate or sodium sulphate, and **in that** said aqueous coating agent solution is an aqueous solution of sodium bicarbonate or sodium sulphate.

3. A method as claimed in claim 1, **characterized in that** in (b) the additional coating layer comprises sodium bicarbonate or sodium sulphate, and **in that** said aqueous coating agent solution in the second spraying step is an aqueous solution of sodium bicarbonate or sodium sulphate.

4. A method as claimed in claim 1, **characterized in that** in (b) said other gas is air.

## Patentansprüche

1. Verfahren zur Herstellung von Natriumpercarbonatteilchen, die mit einer ersten Schicht aus Natriumbicarbonat und einer zweiten Überzugsschicht oben auf der ersten Schicht beschichtet sind,
**dadurch gekennzeichnet, dass**
das Verfahren Folgendes umfasst:
a) den Schritt des Sprühens einer wässrigen Beschichtungsmittellösung in einem Wirbelschichtbett auf die Oberfläche der Natriumpercarbonatteilchen unter Verwendung von Kohlendioxid oder einem Gas, welches reich an Kohlendioxid ist, als Wirbelschichtgas, Erzeugen einer Reaktion auf der Oberfläche der Natriumpercarbonatteilchen zur Bildung der ersten Schicht auf der Oberfläche der Natriumpercarbonatteilchen und der zweiten Überzugsschicht oben auf der ersten Schicht, wobei mindestens ein Teil der ersten Schicht aus dem Natriumcarbonat der Natriumpercarbonatteilchen und dem Kohlendioxid in der Gasphase gebildet ist, oder
b) einen ersten Schritt des Sprühens von Wasser oder einer wässrigen Beschichtungsmittellösung in einem Wirbelschichtbett auf die Oberfläche der Natriumpercarbonatteilchen unter Verwendung von Kohlendioxid oder einem Gas, welches reich an Kohlendioxid ist, als Wirbelschichtgas, Erzeugen einer Reaktion auf der Oberfläche der Natriumpercarbonatteilchen zur Bildung der ersten Schicht auf der Oberfläche der Natriumpercarbonatteilchen und wahlweise einer zweiten Überzugsschicht oben auf der ersten Schicht und einen zweiten Schritt des Sprühens einer wässrigen Beschichtungsmittellösung in einem Wirbelschichtbett auf das Produkt aus dem ersten Schritt unter Verwendung von Kohlendioxid oder einem Gas, welches reich an Kohlendioxid ist, oder irgendeinem anderen Gas als Wirbelschichtgas zur Bildung einer zusätzlichen Überzugsschicht auf der Oberfläche des Produkts aus dem ersten Schritt, wobei zumindest ein Teil der ersten Schicht aus dem Natriumcarbonat der Natriumpercarbonatteilchen und dem Kohlendioxid in der Gasphase gebildet ist.

2. Verfahren nach Anspruch 1, **dadurch gekennzeichnet, dass** die zweite Überzugsschicht aus Natriumbicarbonat oder Natriumsulfat besteht und dass die wässrige Beschichtungsmittellösung eine wässrige Lösung von Natriumbicarbonat oder Natriumsulfat ist.

3. Verfahren nach Anspruch 1, **dadurch gekennzeichnet, dass** in (b) die zusätzliche Überzugsschicht aus Natriumbicarbonat oder Natriumsulfat besteht und dass die wässrige Beschichtungsmittellösung im zweiten Sprühschritt eine wässrige Natriumbicarbonat- oder Natriumsulfatlösung ist.

4. Verfahren nach Anspruch 1, **dadurch gekennzeichnet, dass** in (b) das andere Gas Luft ist.

## Revendications

1. Procédé de préparation de particules de percarbonate de sodium revêtues d'une première couche de bicarbonate de sodium et d'une seconde couche de revêtement par-dessus ladite première couche, **caractérisé en ce que** procédé comprend :
a)l'étape de pulvérisation d'une solution aqueuse d'un agent de revêtement dans un lit fluidisé sur la surface des particules de percarbonate de sodium en utilisant du dioxyde de carbone ou un gaz riche en dioxyde de carbone, comme gaz de fluidification, produisant une réaction sur la surface des particules de percarbonate de sodium, pour former ladite première couche sur la surface des particules de percarbonate de sodium, et ladite seconde couche de revêtement par-dessus la première couche, dans lequel au moins une partie de ladite première couche est générée par le carbonate de sodium des particules de percarbonate de sodium et par le dioxyde de carbone de la phase gazeuse, ou
b)une première étape de pulvérisation d'eau ou d'une solution aqueuse d'agent de revêtement dans un lit fluidisé sur la surface des particules de percarbonate de sodium en utilisant du dioxyde de carbone, ou un gaz riche en dioxyde de carbone, comme gaz de fluidification, produisant une réaction sur la surface des particules de percarbonate de sodium, pour former ladite première couche sur la surface des particules de percarbonate de sodium, et en option, une seconde couche de revêtement par-dessus la première couche, et une seconde étape de pulvérisation d'une solution aqueuse d'agent de revêtement dans un lit fluidisé sur la surface du produit obtenu à la première étape, en utilisant du dioxyde de carbone, ou un gaz riche en dioxyde de carbone, ou tout autre gaz, comme gaz de fluidification, pour former une couche de revêtement supplémentaire sur la surface du produit obtenu à la première étape, dans lequel au moins une partie de ladite première couche est générée par le carbonate de sodium des particules de percabonate de sodium et par le dioxyde de carbone de la phase gazeuse.

2. Procédé selon la revendication 1, **caractérisé en ce que** la seconde couche de revêtement comprend du bicarbonate de sodium ou du sulfate de sodium, et **en ce que** ladite solution aqueuse d'agent de revêtement est une solution aqueuse de bicarbonate de sodium ou de sulfate de sodium.

3. Procédé selon la revendication 1, **caractérisé en ce que**, en (b), la couche de revêtement supplémentaire comprend du bicarbonate de sodium ou du sulfate de sodium, et ce que ladite solution aqueuse d'agent de revêtement dans la seconde étape de pulvérisation est une solution aqueuse de bicarbonate de sodium ou de sulfate de sodium.

4. Procédé selon la revendication 1, **caractérisé en ce que**, en (b), ledit gaz est l'air.
